# EUROPÄISCHE PATENTANMELDUNG

(11) **EP 4 656 283 A1**
(43) Veröffentlichungstag der Anmeldung: **03.12.2025**
(21) Anmeldenummer: 25179016.8
(22) Anmeldetag: 27.05.2025
(51) Int. Cl.: B01J 15/00, B01J 19/00, B01J 19/12, B01J 19/24, B01J 21/06, B01J 37/02

(54) **PHOTOKATALYTISCHER REAKTOR UND VERFAHREN ZUR HERSTELLUNG EINES PHOTOKATALYTISCHEN PANELS**

(30) Priorität: 28.05.2024 DE 102024114942
(71) Anmelder: AMO GmbH, 52074 Aachen (DE)
(72) Erfinder: Ku, Benny, 52066 Aachen (DE); Lemme, Max Christian, 51069 Köln (DE); Plachetka, Ulrich, 41199 Mönchengladbach (DE); Cheong, Oskar Kok Fei, 40225 Düsseldorf (DE)
(74) Vertreter: Patentanwälte Bauer Vorberg Kayser

(57) **Zusammenfassung**

Die Offenbarung betrifft generell einen photokatalytischen Reaktor (10) und ein Verfahren (61) zur Herstellung eines photokatalytischen Panels (26) für einen photokatalytischen Reaktor (10). Der photokatalytische Reaktor (10) weist ein Reaktorbehältnis (24) auf. Das Reaktorbehältnis (24) ist zumindest teilweise lichtdurchlässig. In dem Reaktorbehältnis (24) ist zumindest ein photokatalytisches Panel (26) angeordnet. Anhand des photokatalytischen Panels (26) ist eine photokatalytische Reaktion durchführbar.

## Beschreibung

Die Erfindung betrifft generell einen photokatalytischen Reaktor und ein Verfahren zur Herstellung eines photokatalytischen Panels für einen photokatalytischen Reaktor.

Großtechnische Anlagen zur Produktion von chemischen Stoffen für die verarbeitende Industrie sind nach wie vor von fossilen Rohstoffen abhängig, um die entsprechenden Produktionsziele decken zu können. Als Folge werden hohe Kohlenstoffdioxid-Emissionen verursacht, so dass die zugrundeliegenden Prozesse nicht klimaneutral sind.

In vielen dieser Anlagen fallen chemische Abfälle an, wie beispielweise lösemittelhaltige Abfälle. Bisher werden die chemischen Abfälle anschließend beispielsweise als Brennmaterial zur Energiegewinnung genutzt. Dadurch werden toxische und klimaschädliche Schadstoffe produziert, die aufwendige Filtervorrichtungen erfordern, damit diese nicht in die Umwelt gelangen.

Alternativ sind Recyclingverfahren bekannt, bei denen die chemischen Abfälle in nutzbare Produktstoffe umgesetzt werden. Diese Verfahren verursachen aber einen hohen Energieverbrauch. Insgesamt können chemische Abfälle daher bislang nicht umweltneutral nutzbar gemacht werden, insbesondere nicht Kohlenstoffdioxid-neutral (CO₂-neutral).

Es besteht daher ein Bedürfnis dafür, alternative Verwertungsverfahren für chemische Abfälle bereitzustellen, die eine Reduzierung der CO₂-Emissionen ermöglichen.

Die objektive technische Aufgabe, die zu lösen ist, kann darin gesehen werden, die Nachteile bekannter Verwertungsverfahren von chemischen Abfällen auszuräumen oder zumindest zu verringern. Insbesondere sollen die chemischen Abfälle effizienter und umweltverträglicher als bisher nutzbar gemacht werden können.

Die Aufgabe wird durch die Gegenstände der unabhängigen Patentansprüche gelöst. Vorteilhafte Ausgestaltungen sind in den abhängigen Patentansprüchen und der nachfolgenden Beschreibung angegeben, von denen jeder für sich oder in (Sub-)Kombination Aspekte der Offenbarung darstellen kann. Einige Merkmale werden im Hinblick auf Verfahren erläutert, andere im Hinblick auf Vorrichtungen. Die entsprechenden Aspekte sind aber in entsprechender Weise wechselseitig zu übertragen.

Gemäß einem Aspekt der Erfindung wird ein photokatalytischer Reaktor bereitgestellt. Der photokatalytische Reaktor weist ein Reaktorbehältnis auf. Das Reaktorbehältnis ist zumindest teilweise lichtdurchlässig. In dem Reaktorbehältnis ist zumindest ein photokatalytisches Panel angeordnet. Anhand des photokatalytischen Panels ist eine photokatalytische Reaktion durchführbar.

Der photokatalytische Reaktor ermöglicht die Nutzbarmachung von Licht zur Umsetzung von chemischen Ausgangsstoffen in Produktstoffe, die anschließend weiterverwendet werden können. Dadurch ist vorteilhaft kein Energieverbrauch zur Umsetzung der Ausgangsstoffe nötig. Zusätzlich werden die Ausgangsstoffe auch nicht verbrannt oder verkohlt, sodass die Emission von umweltschädlichen Schadstoffen vermieden werden kann. Durch das photokatalytische Panel kann die Effizienz der photokatalytischen Reaktion vorteilhaft erhöht werden, da das photokatalytische Panel im Hinblick auf die Umsetzung der Ausgangsstoffe in Produktstoffe als Katalysator wirkt. Als Folge kann die Ausbeute der Produktstoffe erhöht werden. Insbesondere kann der photokatalytische Reaktor genutzt werden, um verschiedene Ausgangsstoffe in Produktstoffe umzusetzen, je nach den Bedürfnissen der jeweiligen Anlage, beispielsweise abhängig von den zur Verfügung stehenden Ausgangsstoffen. Der photokatalytische Reaktor gewährleistet auch ein hohes Maß an Flexibilität, da Lichteinstrahlung vielerorts verfügbar ist. Zusätzlich ist der photokatalytische Reaktor nicht darauf beschränkt, dass es sich um natürliches Licht, also Sonnenlicht handelt, sondern kann ebenfalls mit künstlichem Licht betrieben werden, beispielsweise falls das Sonnenlicht aufgrund der Tageszeit oder einer Bewölkung vermindert oder nicht verfügbar ist. Insgesamt wird so die Umsetzung von Ausgangsstoffen in Produktstoffe entsprechend einer hohen Ausbeute ermöglicht, wobei das zugrundeliegende Umsetzungsverfahren vorteilhaft eine Emission von Kohlenstoffdioxid vermeiden kann und somit umweltverträglich ist.

Bevorzugt ist das photokatalytische Panel mit einer semipermeablen Membran derart gekoppelt, dass ein erstes Teilvolumen eines Innenvolumens des Reaktorbehältnisses von einem zweiten Teilvolumen des Innenvolumens des Reaktorbehältnisses separiert ist. Dadurch können verschiedene Teilvolumina innerhalb des Innenvolumens des Reaktorbehältnisses gewährleistet werden, die grundsätzlich voneinander getrennt sind, sodass ein ungewollter Übertritt von Stoffen aus einem Teilvolumen in ein anderes Teilvolumen unterbunden werden kann, zumindest soweit die semipermeable Membran eine solche Diffusion verhindert. Im Endeffekt können durch diese Ausgestaltung Stoffströme zwischen den Teilvolumina durch die semipermeable Membran bedarfsgerecht beschränkt werden.

Optional ragt das photokatalytische Panel ausgehend von der semipermeablen Membran in das erste Teilvolumen. In dem ersten Teilvolumen ist ein Eduktgemisch angeordnet. Edukte des Eduktgemischs werden durch die photokatalytische Reaktion zumindest teilweise in Produkte umgesetzt. Die Produkte sind anhand der semipermeablen Membran aus dem ersten Teilvolumen in das zweite Teilvolumen überführbar (sie diffundieren in das zweite Teilvolumen). Das bedeutet, dass die Wirkung des photokatalytischen Panels innerhalb des ersten Teilvolumens ausgeübt wird. Zusätzlich ist das photokatalytische Panel mit der semipermeablen Membran gekoppelt. Da die Umsetzung der Edukte in die Produkte anhand des photokatalytischen Panels daher benachbart zur semipermeablen Membran erfolgt, ist die Diffusionsstrecke durch die semipermeable Membran in das zweite Teilvolumen für die Produkte daher besonders kurz. Folglich kann die Ausbeute des Diffusionsprozesses durch die semipermeable Membran in das zweite Teilvolumen erhöht werden.

Bevorzugt werden die Produkte (Produktstoffe oder Produktstoffgemisch) aus dem zweiten Teilvolumen des Innenvolumens des Reaktorbehältnisses entfernt. Beispielsweise können die Produkte als Produktstoffgemisch anhand von Fördervorrichtungen, beispielsweise Pumpen, aus dem zweiten Teilvolumen entfernt werden. Als Folge kann die Konzentration der Produkte innerhalb des zweiten Teilvolumens reduziert werden. Insbesondere kann die Konzentration der Produkte innerhalb des zweiten Teilvolumens relativ zur Konzentration der Produkte innerhalb des ersten Teilvolumens jenseits der semipermeablen Membran kleiner sein. Dadurch kann der Diffusionsprozess durch die semipermeable Membran unterstützt werden, was dazu führt, dass die in dem ersten Teilvolumen erzeugten Produkte besonders effizient in das zweite Teilvolumen des Innenvolumens des Reaktorbehältnisses überführt werden.

In einigen Ausführungsformen kann die photokatalytische Reaktion unter Zusetzung von Protonen erfolgen. Die Protonen können dabei aus einer Elektrolyse von Wassermolekülen bereitgestellt werden. Die Elektrolyse von Wassermolekülen kann basierend auf der Lichteinstrahlung erfolgen. Das bedeutet, dass die in dem ersten Teilvolumen des Innenvolumens des Reaktorbehältnisses angeordneten Edukte zumindest Wassermoleküle umfassen können. Insgesamt kann das Eduktgemisch beispielsweise als wässrige Lösung vorliegen. Alternativ kann das Eduktgemisch zumindest anteilig auch andere Lösungsmittel aufweisen, beispielsweise Lösungsmittelabfälle aus chemischen Prozessanlagen, wie Biomasse o.ä.

Das Wasser des Eduktgemischs muss nicht hochrein sein. Vielmehr kann es sich um Schmutzwasser und/oder um Meerwasser handeln.

Bevorzugt werden im Rahmen der photokatalytischen Reaktion höhermolekulare Verbindungen in niedermolekulare Verbindungen umgesetzt. Das bedeutet, dass das Molekulargewicht der Produkte niedriger sein kann als das Molekulargewicht der Edukte. So können die Ausgangsstoffe in Form der Edukte genutzt werden, um Basisverbindungen für nachfolgende chemische Verarbeitungsverfahren bereitzustellen.

Alternativ oder kumulativ können im Rahmen der photokatalytischen Reaktion langkettige organische Moleküle, beispielsweise langkettige Kohlenwasserstoffe in Kohlenwasserstoffe umgesetzt werden, die verglichen mit den Edukten kürzere Ketten von Kohlenwasserstoffen aufweisen, also in kurzkettige Kohlenwasserstoffe. Optional können die Kohlenwasserstoffe natürlich funktionelle Gruppen oder Liganden aufweisen, beispielsweise Alkoholgruppen o.ä.

Beispielhaft können unter langkettigen Kohlenwasserstoffen zumindest Kohlenwasserstoffverbindungen verstanden werden, die zumindest acht Kohlenstoffatomen aufweisen. Dann können unter kurzkettigen Kohlenwasserstoffen zumindest Kohlenwasserstoffverbindungen verstanden werden, die höchstens vier Kohlenstoffatomen aufweisen. Die entsprechenden Anzahlen der Kohlenstoffatome können allerdings auch abweichen.

Alternativ oder kumulativ kann die photokatalytische Reaktion auch genutzt werden, um für organische Kohlenwasserstoffverbindungen den Sättigungsgrad zu reduzieren oder zu erhöhen. Das bedeutet, dass beispielsweise gesättigte Kohlenwasserstoffverbindungen in ungesättigte Kohlenwasserstoffverbindungen umgesetzt werden können, oder alternativ auch umgekehrt.

In einigen Ausführungsformen können durch die photokatalytische Reaktion langkettige Kohlenwasserstoffe und/oder langkettige Alkohole als Edukte in Wasserstoffmoleküle und/oder Sauerstoffmoleküle und/oder kurzkettige Kohlenwasserstoffe und/oder kurzkettige Alkohole und/oder kurzkettige Kohlenstoffoxide als Produkte umgesetzt werden.

Insgesamt kann die photokatalytische Reaktion genutzt werden, um Edukte des Eduktgemischs in zumindest ein oder mehrere Produkte eines Produktgemischs umzusetzen. Insbesondere die Produkte können dann nachfolgend in der verarbeitenden Industrie als Ausgangsstoffe genutzt werden. Die photokatalytische Reaktion ermöglicht es also, Edukte, die beispielsweise in Form von chemischen Abfällen aus verfahrenstechnischen Anlagen bereitgestellt werden, erneut als Produkte nutzbar zu machen. Die Produkte entsprechen dabei in der Regel niedermolekularen Verbindungen, die in vielfältiger Weise verwendet werden können.

Optional weist das photokatalytische Panel zumindest ein Substrat und eine nanostrukturierte Oberfläche auf einer Seite des Substrats auf. Durch die nanostrukturierte Oberfläche kann die Wirkung des photokatalytischen Panels als Katalysator bei der photokatalytischen Reaktion verbessert und insbesondere bedarfsgerecht eingestellt werden. So kann die Ausbeute der erhaltenen Produkte erhöht werden.

Bevorzugt weist die nanostrukturierte Oberfläche dreidimensionale Strukturen auf, die derart geformt sind, dass Beugungsstrukturen und/oder optische Fallen für das auftreffende Licht und/oder eine Brechungsindexüberleitung hinsichtlich des Substrats ausgebildet werden. Dadurch kann beispielsweise eine Mehrfachreflexion bezüglich des auftreffenden Lichts gewährleistet werden, sodass die Reflexion des Lichts von der nanostrukturierten Oberfläche weg besser als ohne die dreidimensionalen Strukturen verhindert werden kann. Das bedeutet, dass die Absorption der Lichteinstrahlung erhöht wird. Durch die Brechungsindexüberleitung kann der sogenannte Mottenaugen-Effekt gewährleistet werden, bei dem der graduelle Übergang des Brechungsindex eine Unterdrückung der Reflexion des eintreffenden Lichts gewährleistet. Anders ausgedrückt kann die Lichtausbeute durch die genannten Ausbildungen erhöht werden, zumindest im Hinblick auf bestimmte Wellenlängenbereiche. Durch das Muster kann beispielsweise die Absorption des Lichts im ultravioletten, Nah-Infrarotbereich oder im Wellenlängenbereich des sichtbaren Lichts erhöht werden. Als Folge wird die Ausbeute der photokatalytischen Reaktion erhöht, beispielsweise weil durch die höhere Lichtausbeute die Ausbeute bei der Elektrolyse von Wassermolekülen erhöht ist und daher mehr Protonen im Rahmen der photokatalytischen Reaktion zugesetzt werden können.

Optional können die dreidimensionalen Strukturen durch verschiedene Depositionsverfahren und/oder Lithographieverfahren hergestellt werden.

In einigen Ausführungsformen sind die dreidimensionalen Strukturen in einem sich periodisch wiederholenden Muster angeordnet. Dadurch kann die Lichtausbeute noch erhöht werden.

Optional kann das Muster ein regelmäßiges Muster sein und eine lineare, quadratische, rechteckige oder hexagonale Anordnung von separaten Musterelementen aufweisen, die sich periodisch wiederholen, insbesondere in zwei zueinander orthogonalen Richtungen.

Bevorzugt weist die nanostrukturierte Oberfläche als Photokatalysator wirkende porös angeordnete Nanopartikel auf. Die Nanopartikel erhöhen die Ausbeute bei der Umsetzung der Edukte in die Produkte. Dadurch, dass die Nanopartikel porös angeordnet sind, kann die zur Verfügung stehende Oberfläche der Nanopartikel erhöht werden, wodurch die Ausbeute bei der Umsetzung weiter erhöht wird, da die Oberfläche der Nanopartikel als Reaktionsfläche (oder zumindest als Katalysatorfläche) dient.

Optional ist eine Porosität der dreidimensionalen Struktur während ihrer Herstellung einstellbar. Beispielsweise können die Nanopartikel bei der Herstellung in einem Lackmaterial, das eine Matrix aufweist, gebunden sein. Ein Teil des Lackmaterials (beispielsweise organische Materialkomponenten davon) kann dann während der Herstellung selektiv entfernt werden, beispielsweise basierend auf nass-chemischen Ätzverfahren. Dadurch kann die Porosität der dreidimensionalen Struktur während der Herstellung eingestellt werden, wodurch die zur Verfügung stehende Reaktionsfläche bedarfsgerecht gewählt werden kann. Als Folge kann die Ausbeute der photokatalytischen Reaktion anhand einer Erhöhung der zur Verfügung stehenden Reaktionsbleche erhöht werden.

Bevorzugt werden die Musterelemente der dreidimensionalen Struktur zumindest anteilig durch die Nanopartikel ausgebildet. Als Folge sind die Nanopartikel entsprechend des Musters der dreidimensionalen Struktur über die nanostrukturierte Oberfläche verteilt.

In einigen Ausführungsformen weist die nanostrukturierte Oberfläche zumindest anteilig metallische Inselstrukturen auf. Die metallischen Inselstrukturen sind derart eingerichtet, dass unter der Lichteinstrahlung Oberflächenplasmonen erzeugbar sind, also kohärente Schwingungen freier Elektronen. Die Inselstrukturen tragen bei der photokatalytischen Reaktion als Kokatalysator bei. Somit kann die Umsetzung der Edukte in Produkte noch unterstützt werden. Die Eigenschaften der erzeugten Oberflächenplasmonen können dabei durch die Eigenschaften der metallischen Inselstrukturen beeinflusst und/oder maßgeschneidert eingestellt werden. Dadurch kann die Wirkung der metallischen Inselstrukturen als Kokatalysator bei der photokatalytischen Reaktion erhöht werden.

Bevorzugt sind die metallischen Inselstrukturen ebenfalls entsprechend der dreidimensionalen Struktur der nanostrukturierten Oberfläche angeordnet. Das bedeutet, dass die metallischen Inselstrukturen insbesondere ebenfalls in einem Muster angeordnet sein können. Die Musterformen entsprechen dabei den bereits genannten. Das Muster der metallischen Inselstrukturen kann insbesondere mit dem Muster der dreidimensionalen Struktur übereinstimmen. Also können sowohl die Nanopartikel als auch die metallischen Inselstrukturen entsprechend demselben Muster über die nanostrukturierte Oberfläche verteilt sein. Da die Nanopartikel mit den metallischen Inselstrukturen wechselwirken können, kann so die Homogenität der durch die Wechselwirkung verursachten Effekte erhöht werden.

Optional weisen die Nanopartikel insbesondere ein photokatalytisches Material auf. Beispielsweise kann das photokatalytische Material zumindest teilweise Halbleiterverbindungen umfassen. Beispielsweise können die Halbleiterverbindungen TIO₂, ZnO, CdS oder Fe₂O₃ aufweisen.

In einigen Ausführungsformen können die Inselstrukturen ein Material aufweisen, das kokatalytische Eigenschaften oder ein Material, das die Adsorption an der Oberfläche auf vorteilhafte Weise beeinflusst, beispielsweise die Wahrscheinlichkeit und/oder Ausbeute der Adsorption erhöht. Das Material kann beispielsweise Gold aufweisen, oder auch Silber, Platin, Palladium, Kupfer, Aluminium, Ruthenium, Nickel, Rhodium, Kobalt, Iridium, eine Mischung aus den aufgezählten Metallen, oder eine dotierte Halbleiterverbindung. Insbesondere Gold und Silber weisen vorteilhafte plasmonische Eigenschaften auf. Die Inselstrukturen können auch aus einer Legierung der vorangehend genannten oder anderweitigen leitfähigen Materialien gebildet sein.

Die Kombination von Nanopartikeln und Inselstrukturen schafft eine Oberfläche, die durch die Wechselwirkung zwischen den Nanopartikeln und den Inselstrukturen besonders gute katalytische Eigenschaften bezüglich der photokatalytischen Reaktion aufweist. Diese Eigenschaften werden durch die Formgebung der nanostrukturierten Oberfläche, die eine entsprechende dreidimensionale Struktur aufweist, noch verstärkt. Daher können durch die Kombination von Nanopartikeln, die insbesondere Halbleiterverbindungen aufweisen, und Inselstrukturen insbesondere mehrere Effekte hinsichtlich der photokatalytischen Reaktion gewährleistet werden. Beispielsweise kann das den Inselstrukturen zugrundeliegende Material überall gleich bzw. homogen verteilt sein. Also liegen keine Dichteschwankungen der Strukturen über die Fläche vor. Zudem können die Größenordnung der dreidimensionalen Nanostrukturelemente und der zugehörigen Muster eingestellt und reproduzierbar wiederholt werden, um die Plasmonenresonanz exakt vorzubestimmen. Durch Anpassung des Tastverhältnisses der dreidimensionalen Strukturen können die Strukturen als Einzelantennen betrachtet und ausgelegt werden (kleines Tastverhältnis). Dann spielt die Strukturgröße der dreidimensionalen Strukturen die Hauptrolle bei den plasmonischen Effekten. Alternativ kann der Abstand zwischen den dreidimensionalen Strukturen klein gewählt werden (großes Tastverhältnis). Dann dominiert die Feldkopplung die plasmonischen Effekte auf Basis der kleinen Abstände zwischen den dreidimensionalen Strukturen. In der Umgebung der Kontaktstelle zwischen Metall (der Inselstrukturen) und den Halbleiterverbindungen der Nanopartikel wird die Bandlückenlimitierung der Absorption des Halbleiters durch die Plasmonik reduziert. Die Gesamtanordnung absorbiert deshalb mehr Licht. Durch das zugrundeliegende Herstellungsverfahren (siehe weiter unten) haben die plasmonischen Inselstrukturen, anders als Kolloide, einen ganzflächigen Kontakt zu den halbleiter-haltigen Nanopartikeln. Am Übergang zwischen Inselstrukturen (also Metall) und den halbleiter-haltigen Nanopartikeln entsteht eine Schottky-Barriere, die die Rekombination der Ladungsträger reduziert. Durch die geordnete, periodische Anordnung der Nanopartikel und Inselstrukturen innerhalb der dreidimensionalen Struktur kann die Abschattung der Nanopartikel exakt eingestellt werden. Die Inselstrukturen können als Kokatalysator bei der photokatalytischen Reaktion wirken, wodurch die Ausbeute erhöht wird. Mit der periodischen Verteilung entsprechend der dreidimensionalen Struktur lässt sich dieser Effekt noch besser ausnutzen.

Optional umfasst ein Material des Reaktorbehältnisses ein Glas, insbesondere Quarzglas. Dadurch ist das Reaktorbehältnis einerseits widerstandsfähig, weist zudem ein reaktionsträges Material auf, und kann andererseits insbesondere zusammen mit einfallendem Licht genutzt werden.

Bevorzugt weist das Reaktorbehältnis eine gekrümmte Oberfläche auf. Dadurch kann die Homogenität der Lichteinstrahlung bezüglich verschiedener Einfallswinkel verbessert werden.

In einigen Ausführungsformen kann das Reaktorbehältnis insbesondere eine kreisförmige Querschnittskontur aufweisen. Beispielsweise kann das Reaktorbehältnis zumindest teilweise durch ein Rohr ausgebildet werden. Dann ist auch die strukturelle Widerstandskraft besonders hoch.

Optional weist der photokatalytische Reaktor ferner einen extern zum Reaktorbehältnis angeordneten Lichtkollektor auf. Der Lichtkollektor ist angeordnet und eingerichtet, Licht auf das Reaktorbehältnis zu fokussieren. Dadurch kann Licht, das eigentlich nicht auf das Reaktorbehältnis treffen würde, anhand des Lichtkollektors in Richtung des Reaktorbehältnisses abgelenkt werden. So kann die Lichteinstrahlung auf den Reaktorbehältnis erhöht werden.

Bevorzugt kann das fokussierte Licht Sonnenlicht oder künstliches Licht umfassen. Die Nutzung von Sonnenlicht reduziert die Betriebskosten, während die Nutzung von künstlichem Licht beispielsweise die Betriebsdauer je Zeiteinheit erhöhen kann, da der photokatalytische Reaktor dann auch betrieben werden kann, falls gerade kein Sonnenlicht zur Verfügung steht, beispielsweise zu Nachtzeiten.

In einigen Ausführungsformen weist der Lichtkollektor eine gekrümmte Kollektoroberfläche auf. Dann kann der Lichtkollektor beispielsweise konzentrisch zum Reaktorbehältnis angeordnet werden, wodurch die Fokussierung des Lichts auf das Reaktorbehältnis verbessert wird. Insbesondere wird eine Homogenität hinsichtlich der Fokussierung des Lichts ermöglicht.

Die Krümmung der Kollektoroberfläche kann insbesondere komplementär zur Krümmung des Reaktorbehältnisses ausgebildet sein. Das bedeutet, dass eine Querschnittskontur der Kollektoroberfläche entsprechend einer Teilkreiskontur eingerichtet sein kann.

Optional ist der Lichtkollektor als eine Fresnel-Linse ausgebildet. Dadurch wird eine volumen- und massereduzierte Bauform des Lichtkollektors ermöglicht.

Bevorzugt weist der Reaktor in lichtundurchsichtigen Bereichen und/oder an lichtundurchlässigen Seiten eine nach innen ausgerichtete, spiegelnde Beschichtung auf. Als Folge wird das Licht durch die spiegelnde Beschichtung zurückgeworfen. So kann Licht, das nicht absorbiert wurde oder das unter einem ungünstigen Winkel gestreut in den Reaktor fällt, zurückgeworfen werden, wodurch die Ausbeute erhöht ist. Die spiegelnde Oberfläche kann beispielsweise durch ein entsprechendes Material gewährleistet werden. Die Oberfläche kann zudem poliert sein.

In einigen Ausführungsformen weist der photokatalytische Reaktor stromabwärts des Reaktorbehältnisses einen Speicher auf, der mit dem Reaktorbehältnis gekoppelt ist. Die Produkte können aus dem Reaktorbehältnis in den Speicher entfernt werden und darin für die weitere Verwendung gespeichert werden.

Dadurch kann die Konzentration der Produkte innerhalb des Reaktorbehältnisses, insbesondere dem zweiten Teilvolumen davon, reduziert werden. Als Folge kann die Diffusion der Produkte durch die semipermeable Membran unterstützt werden. Somit kann die Ausbeute der erzeugten Produkte erhöht werden.

Innerhalb des Reaktorbehältnisses (oder einer separaten Verdampfungskammer) wird das Wasser des Eduktgemischs im ersten Teilvolumen zunächst verdampft, insbesondere durch Nutzung des auftreffenden Lichts. In diesem Zuge bleibt der Großteil der gelösten sonstigen Stoffe des Eduktgemischs als Feststoff im Reaktorbehältnis zurück.

Zusätzlich werden auch die übrigen Lösungsmittel des Eduktgemischs innerhalb des Reaktorbehältnisses (oder innerhalb einer separaten Verdampfungskammer) im ersten Teilvolumen verdampft, insbesondere ebenfalls unter Nutzung des auftreffenden Lichts.

Optional kann die Verdampfung der Wasserverbindungen und der Lösungsmittelverbindungen auch innerhalb einer Verdampfungssektion erfolgen, die dem Reaktorbehältnis des photokatalytischen Reaktors vorgeschaltet ist. Die Verdampfungssektion kann eine Verdampfungskammer aufweisen. Beispielsweise können Rohre, die gleiche äußere Abmessungen aufweisen, aneinandergereiht sein und einerseits die Verdampfungskammer und andererseits das Reaktorbehältnis ausbilden. Während die Verdampfung der Wasserverbindungen und der Lösungsmittelverbindungen innerhalb des stromaufwärts gelegenen ersten Rohrs erfolgt, kann das photokatalytische Panel ausschließlich im stromabwärts angeordneten, zweiten Rohr angeordnet sein. Die eigentliche photokatalytische Reaktion erfolgt dann ausschließlich im stromabwärts angeordneten, zweiten Rohr. Dennoch kann die Verdampfungssektion als Teil des photokatalytischen Reaktors angesehen werden. So kann der photokatalytische Reaktor also maßgeschneiderte Sektionen aufweisen, um die zugrunde liegenden prozesstechnischen Reaktionen zu optimieren.

Der Wasserdampf und der Lösungsmitteldampf werden dann in der photokatalytischen Reaktion im ersten Teilvolumen des Reaktionsbehältnisses verwendet, indem die Nanopartikel als Katalysator (und die metallischen Inselstrukturen als Kokatalysator) genutzt werden. Wasserdampfmoleküle und Lösungsmitteldampfmoleküle lagern sich an den Katalysator bzw. Kokatalysator an. Im Rahmen der photokatalytischen Reaktion werden dann die Ausgangsverbindungen, also Wasser- und Lösemittelverbindungen aufgespalten und in solare Brennstoffe (niedermolekulare Verbindungen) reformiert.

Die so erzeugten Produktverbindungen diffundieren durch die semipermeable Membran in das zweite Teilvolumen und werden als Produktgemisch aus dem Reaktorbehältnis entfernt.

Vorteilhaft ist der photokatalytische Reaktor derart eingerichtet, dass die Edukte des Eduktgemischs mehrfach über das photokatalytische Panel geleitet werden können. Dadurch kann die Reaktionswahrscheinlichkeit und damit die Ausbeute der Produkte erhöht werden.

So wird ein photokatalytischer Reaktor geschaffen, der ein Eduktgemisch zumindest anteilig vorteilhaft emissionsfrei in Produkte umsetzen kann, die anschließend für weitere Prozesse verwendet werden können.

Gemäß einem weiteren Aspekt der Erfindung wird ein Verfahren zur Herstellung eines photokatalytischen Panels für einen photokatalytischen Reaktor bereitgestellt. Das Verfahren umfasst zumindest die folgenden Schritte:
- Ein Substrat wird bereitgestellt;
- Ein Halbleiterkompositlackmaterial wird auf eine Substratoberfläche aufgebracht. Das Halbleiterkompositlackmaterial weist organische und anorganische Materialkomponenten auf;
- Eine nanostrukturierte Oberfläche wird durch ein lithographisches Verfahren ausgebildet. Die nanostrukturierte Oberfläche weist dreidimensionale Strukturen auf, die derart geformt sind, dass Beugungsstrukturen und/oder optische Fallen für auftreffendes Licht und/oder eine Brechungsindexüberleitung hinsichtlich des Substrats ausgebildet werden;
- Zumindest ein Teil der organischen Materialkomponenten des Halbleiterkompositlackmaterials wird durch ein selektives Ätzverfahren, oder ein thermisches oder laserbasiertes Ablationsverfahren entfernt.

Dadurch wird ein Verfahren geschaffen, basierend auf dem auch anorganische Materialkomponenten beispielsweise Halbleiterverbindungen oder Metalle in definierter Weise auf die Substratoberfläche aufgebracht werden können. In diesem Zuge wird die Oberfläche anhand der genannten Verfahren derart bearbeitet, dass sie dreidimensionale Strukturen aufweist. Durch die dreidimensionalen Strukturen kann insbesondere die Reflexion des auftreffenden Lichts reduziert und folglich die Absorption des auftreffenden Lichts erhöht werden. Anders ausgedrückt kann die Ausbeute des auftreffenden Lichts erhöht werden. So wird ein Verfahren zur Herstellung eines photokatalytischen Panels geschaffen, das als Katalysator, insbesondere als Photokatalysator, eingesetzt werden kann, um eine photokatalytische Reaktion zu unterstützen. Als Folge kann die Ausbeute der Umsetzung von Edukten des Eduktgemischs in Produkte im Zusammenhang mit der photokatalytischen Reaktion erhöht werden. Zusätzlich kann anhand der zumindest teilweisen Entfernung der organischen Materialkomponenten des Halbleiterkompositlackmaterials die Porosität der nanostrukturierten Oberfläche erhöht werden. Als Folge wird eine größere Oberfläche bereitgestellt, an der die Wechselwirkung der nanostrukturierten Oberfläche mit den Edukten der photokatalytischen Reaktion auftreten kann. Auch durch diese Maßnahme wird die Ausbeute der photokatalytischen Reaktion noch erhöht. Insgesamt wird so in Form des photokatalytischen Panels eine Vorrichtung geschaffen, anhand der chemische Ausgangsstoffe, beispielsweise chemische Abfälle, effizient in Produkte umgesetzt werden können, die nachfolgend zur weiteren Verarbeitung verwendet werden können.

In einigen Ausführungsformen wird das Halbleiterkompositlackmaterial als Fließlösung auf die Substratoberfläche aufgebracht. Alternativ kann das Halbleiterkompositlackmaterial auch durch ein Depositionsverfahren auf die Substratoberfläche aufgebracht werden, beispielsweise eine Gasphasenabscheidung oder durch Aufsputtern. Optional kann beim Aufbringen des Halbleiterkompositlackmaterials eine Maske zum Einsatz kommen, damit eine ungleichmäßige Verteilung des Halbleiterkompositlackmaterials ermöglicht wird. So kann schon beim Aufbringen des Halbleiterkompositlackmaterials eine dreidimensionale Struktur der nanostrukturierten Oberfläche ermöglicht werden. Die dreidimensionale Struktur kann die zuvor genannten vorteilhaften Eigenschaften bezüglich der Absorption des auftreffenden Lichts ermöglichen.

Die organischen Materialkomponenten des Halbleiterkompositlackmaterials agieren als Matrix für die in dem Halbleiterkompositlackmaterial gelösten anorganischen Materialkomponenten. Die Matrix wird anschließend durch die genannten Verfahren zumindest teilweise entfernt, sodass die anorganischen Materialkomponenten freigelegt werden.

Optional kann das Halbleiterkompositlackmaterial zumindest teilweise ausgehärtet werden, bevor die organischen Materialkomponenten selektiv entfernt werden.

Die anorganischen Materialkomponenten des Halbleiterkompositlackmaterials können grundsätzlich derart gewählt sein, dass mehrere Funktionen gewährleistet werden, beispielsweise die Funktion als Photokatalysator, als Leiter, als Materialtransportschicht oder als Elektrode. Werden die organischen Materialkomponenten des Halbleiterkompositlackmaterials anschließend durch entsprechende Verfahren (beispielsweise nass-chemische Ätzverfahren) entfernt, so können die Funktionen der anorganischen Materialkomponenten umso dominanter ausgebildet werden, je mehr von den organischen Materialkomponenten als Matrix selektiv entfernt wird.

Optional wird die nanostrukturierte Oberfläche basierend auf dem lithographischen Verfahren derart ausgebildet, dass die dreidimensionalen Strukturen in einem sich periodisch wiederholenden Muster angeordnet sind. Das Muster kann also sich wiederholende Mustereinheiten aufweisen. Dadurch können die bereits zuvor erläuterten Vorteile hinsichtlich der Absorption des auftreffenden Lichts gewährleistet werden.

Bevorzugt wird bei der Ausübung des lithographischen Verfahrens eine Maske verwendet, damit nur bestimmte Bereiche der Substratoberfläche im Rahmen des lithographischen Verfahrens bearbeitet werden. Als Folge können definierte dreidimensionale Strukturen auf der nanostrukturierten Oberfläche geschaffen werden, beispielsweise Muster, die regelmäßig angeordnete Mustereinheiten aufweisen. Die Muster können wie bereits zuvor beschrieben ausgebildet sein. Wird bereits im Rahmen der Deposition des Halbleiterkompositlackmaterials ein Muster geschaffen, so kann durch die bedarfsgerechte Ausübung des lithographischen Verfahrens die Definiertheit des Musters hinsichtlich seiner einzelnen Mustereinheiten erhöht werden. Während beispielsweise im Rahmen des Aufbringens des Halbleiterkompositlackmaterials erhabene Strukturen ausgebildet werden können, so können durch die Ausübung des lithographischen Verfahrens diese erhabenen Strukturen insoweit verändert werden, dass sie besser bestimmten Formen entsprechen, beispielsweise Kegelformen.

Optional werden die anorganischen Materialkomponenten zumindest teilweise durch als Photokatalysator wirkende, porös angeordnete Nanopartikel ausgebildet. Die Nanopartikel können wie bereits zuvor beschrieben ausgebildet sein.

Bevorzugt ist eine Porosität der dreidimensionalen Struktur während ihrer Herstellung im Schritt des Entfernens der organischen Materialkomponenten einstellbar. Insbesondere die Zeitdauer des entsprechenden selektiven Ätzverfahrens oder des thermischen oder laserbasierten Ablationsverfahrens hat Einfluss darauf, welche relative Menge der organischen Materialkomponenten des Halbleiterkompositlackmaterials entfernt wird. Optional können auch entsprechende Masken zum Einsatz kommen, damit nur bestimmte Bereiche der Substratoberfläche mit den genannten Entfernungsverfahren bearbeitet werden. Insgesamt ist so in jedem Fall die Porosität der dreidimensionalen Struktur einstellbar, wodurch Einfluss auf die im Rahmen der photokatalytischen Reaktion zur Verfügung stehende Substratoberfläche genommen werden kann. Insbesondere kann die katalytische Wirkung der Nanopartikel dadurch unterstützt werden. Dies ermöglicht es, die Porosität derart einzustellen, dass die photokatalytische Reaktion optimiert ist.

In einigen Ausführungsformen werden zusätzliche metallische Inselstrukturen auf die nanostrukturierte Oberfläche aufgebracht. Optional können die metallischen Inselstrukturen durch Sputtern oder Aufdampfen auf die nanostrukturierte Oberfläche aufgebracht werden. Insbesondere können die metallischen Inselstrukturen entsprechend einem Muster angeordnet werden. Dazu kann eine entsprechende Maske verwendet werden. Das Muster der metallischen Inselstrukturen kann dem Muster der dreidimensionalen Strukturen der nanostrukturierten Oberfläche entsprechen. Die metallischen Inselstrukturen können wie bereits zuvor erläutert ausgebildet sein. Die metallischen Inselstrukturen können insbesondere die Anregung von Oberflächenplasmonen unterstützen, insbesondere die Anregung durch auftreffendes Licht. So können die zuvor bereits skizzierten Wechselwirkungen und Vorteile erreicht werden, die schlussendlich einerseits durch die Nanopartikel und andererseits durch die metallischen Inselstrukturen gewährleistet werden.

Optional wird das Halbleiterkompositlackmaterial anhand eines thermischen oder eines licht-gestützten Expositionsverfahrens polymerisiert. Dadurch können ungesättigte organische Kohlenwasserstoffverbindungen in gesättigte Kohlenwasserstoffverbindungen umgesetzt werden. Nachgelagert können die gesättigten Kohlenwasserstoffverbindungen dann anhand der photokatalytischen Reaktion, wie bereits dargestellt, in Produkte umgesetzt werden.

Die Erfindung betrifft auch einen photokatalytischen Reaktor mit einem photokatalytischen Panel, das nach dem Verfahren wie zuvor beschrieben hergestellt ist.

Sämtliche im Hinblick auf die verschiedenen Aspekte erläuterten Merkmale sind einzeln oder in (Sub-)Kombination mit anderen Aspekten kombinierbar.

Die Offenbarung sowie weitere vorteilhafte Ausführungsformen und Weiterbildungen derselben werden im Folgenden anhand der in den Zeichnungen dargestellten Beispiele näher beschrieben und erläutert. Es zeigen:
- Fig. 1 eine vereinfachte schematische Darstellung eines photokatalytischen Reaktors in einem Anwendungsfall gemäß einer Ausführungsform der Erfindung,
- Fig. 2 eine vereinfachte schematische Darstellung eines Reaktorbehältnisses eines photokatalytischen Reaktors gemäß einer Ausführungsform der Erfindung,
- Fig. 3 eine vereinfachte schematische Darstellung von Teilen eines photokatalytischen Panels eines photokatalytischen Reaktors gemäß einer Ausführungsform der Erfindung, und
- Fig. 4 eine vereinfachte schematische Darstellung eines Verfahrens zur Herstellung eines photokatalytischen Panels für einen photokatalytischen Reaktor gemäß einer Ausführungsform der Erfindung.

Die nachstehende detaillierte Beschreibung in Verbindung mit den beigefügten Zeichnungen, in denen gleiche Ziffern auf gleiche Elemente verweisen, ist als Beschreibung verschiedener Ausführungsformen des offengelegten Gegenstands gedacht und soll nicht die einzigen Ausführungsformen darstellen. Jede in dieser Offenbarung beschriebene Ausführungsform dient lediglich als Beispiel oder Illustration und sollte nicht als bevorzugt oder vorteilhaft gegenüber anderen Ausführungsformen ausgelegt werden. Die hierin enthaltenen illustrativen Beispiele erheben keinen Anspruch auf Vollständigkeit und limitieren den beanspruchten Gegenstand nicht auf die genauen offengelegten Formen. Verschiedene Abwandlungen der beschriebenen Ausführungsformen sind für den Fachmann ohne weiteres erkennbar, und die hierin definierten allgemeinen Grundsätze können auf andere Ausführungsformen und Anwendungen angewandt werden, ohne vom Geist und Umfang der beschriebenen Ausführungsformen abzuweichen. Daher sind die beschriebenen Ausführungsformen nicht auf die gezeigten Ausführungsformen limitiert, sondern haben den größtmöglichen Anwendungsbereich, der mit den hier offengelegten Grundsätzen und Merkmalen vereinbar ist.

Alle nachstehend in Bezug auf die Ausführungsbeispiele und/oder die begleitenden Figuren offengelegten Merkmale können allein oder in einer beliebigen Unterkombination mit Merkmalen der Aspekte der Offenbarung, einschließlich Merkmalen bevorzugter Ausführungsformen, kombiniert werden, vorausgesetzt, die sich ergebende Merkmalskombination ist für einen Fachmann auf dem Gebiet der Technik sinnvoll.

Für die Zwecke der Offenbarung bedeutet die Formulierung "mindestens eines von A, B und C" beispielsweise (A), (B), (C), (A und B), (A und C), (B und C) oder (A, B und C), einschließlich aller weiteren möglichen Kombinationen, wenn mehr als drei Elemente aufgeführt sind. Mit anderen Worten, der Begriff "mindestens eines von A und B" bedeutet im Allgemeinen "A und/oder B", nämlich "A" allein, "B" allein oder "A und B".

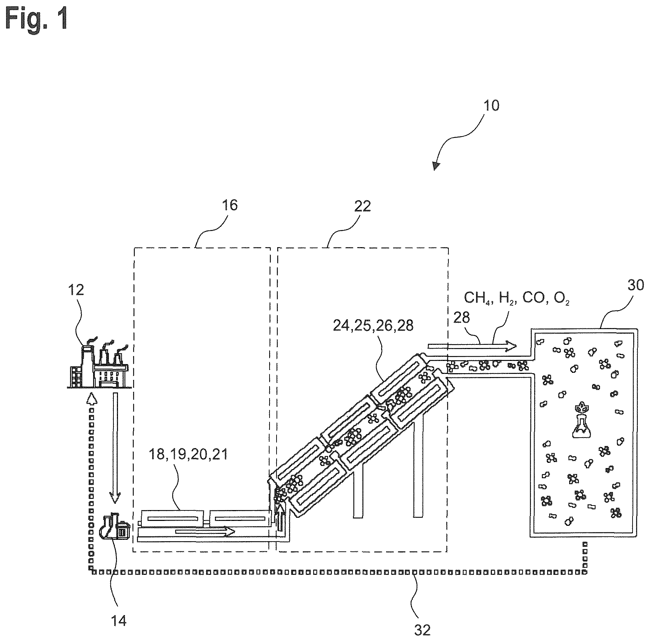

Fig. 1 zeigt eine vereinfachte schematische Darstellung eines photokatalytischen Reaktors 10 in einem Anwendungsfall gemäß einer Ausführungsform der Erfindung.

Eine prozesstechnische Anlage 12, in der ein chemisches Verfahren abläuft, produziert chemische Abfälle 14. Die chemischen Abfälle 14 umfassen vorliegend langkettige Kohlenwasserstoffverbindungen, langkettige Alkohole, Lösungsmittelabfälle und Wasser.

Der photokatalytische Reaktor 10 umfasst stromaufwärts eine Verdampfungssektion 16. Die Verdampfungssektion 16 weist eine Verdampfungskammer 18 auf, in die hinein die chemischen Abfälle 14 als Eduktgemisch 20 umfassend Edukte 21 geleitet werden. Die Verdampfungskammer 18 wird vorliegend durch ein Rohr 19 ausgebildet.

Der photokatalytische Reaktor 10 umfasst zudem stromabwärts der Verdampfungssektion 16 eine Reaktionssektion 22. Die Reaktionssektion 22 weist ein Reaktorbehältnis 24 auf, das durch ein Rohr 25 ausgebildet wird. In dem Reaktorbehältnis 24 ist zumindest ein photokatalytisches Panel 26 angeordnet.

Das Rohr des Reaktorbehältnisses 24 der Reaktionssektion 22 ist fluidisch mit der Verdampfungskammer 18 gekoppelt. Vorliegend sind das Rohr 25 des Reaktorbehältnisses 24 und das Rohr 19 der Verdampfungskammer 18 baugleich. Im Allgemeinen müssen das Rohr 25 des Reaktorbehältnisses 24 und das Rohr 19 der Verdampfungskammer 18 aber nicht baugleich sein.

Das Rohr 25 des Reaktorbehältnisses 24 und das Rohr 19 der Verdampfungskammer 18 weisen ein lichtdurchlässiges Material auf, beispielsweise ein Glas, insbesondere Quarzglas.

In der Verdampfungskammer 18 wird externes Licht, beispielsweise Sonnenlicht oder künstliches Licht, genutzt, um Wasserverbindungen und Lösungsmittelverbindungen zu verdampfen. Der Wasserdampf und der Lösungsmitteldampf werden anschließend dem Reaktorbehältnis 24 der Reaktionssektion 22 zugeführt. Dort werden sie mithilfe des photokatalytischen Panels 26 unter Lichteinstrahlung, beispielsweise durch Sonnenlicht oder künstliches Licht, aufgespalten, um Produkte 28 zu erzeugen. Die bei der Aufspaltung der Wassermoleküle gewonnen Protonen werden zusätzlich genutzt, um weitere chemische Verbindungen umzusetzen. Beispielsweise können langkettige Kohlenwasserstoffverbindungen oder langkettige Alkohole in kurzkettige Kohlenwasserstoffverbindungen oder kurzkettig Alkohole umgesetzt werden. Typischerweise werden anhand der photokatalytischen Reaktion Produkte 28 erzeugt, die ein Molekulargewicht aufweisen, das kleiner als das Molekulargewicht der Edukte 21 des Eduktgemischs 20 ist. Dazu werden Katalysatoren verwendet, die durch das photokatalytische Panel 26 verwirklicht sind. Als Folge entsteht ein Produktgemisch umfassend Produkte 28, das aus dem Reaktorbehältnis 24 entfernt werden kann.

Beispielhaft können langkettige Kohlenwasserstoffverbindungen, die in dem Eduktgemisch 20 enthalten sein können, in Methan (CH₄) umgesetzt werden. Alkohole können in Kohlenmonoxid (CO) umgesetzt werden. Wassermoleküle können in molekularen Wasserstoff (H₂) und Sauerstoff (O₂) umgesetzt werden. Insbesondere Methan, Wasserstoff und Sauerstoff können auf vielfältige Weise in nachgelagerten chemischen Prozessen verwendet werden, beispielsweise als "solarer Brennstoff".

Vorliegend werden die Produkte 28 einem Speicher 30 zugeführt, in dem die Produkte 28 zwischengespeichert werden können. Selbstverständlich können die unterschiedlichen Produkte 28 des Produktgemischs voneinander abgetrennt und separat gespeichert werden.

Gemäß dem hier dargestellten Anwendungsfall werden die Produkte 28 anschließend innerhalb der prozesstechnischen Anlage 12 wiederverwendet. Dazu weist der Speicher 30 eine Zuleitung 32 zu der prozesstechnischen Anlage 12 auf.

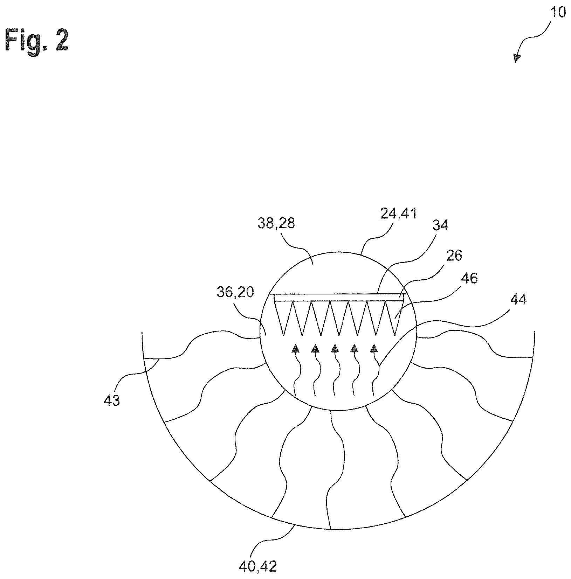

Fig. 2 zeigt eine vereinfachte schematische Darstellung eines Reaktorbehältnisses 24 eines photokatalytischen Reaktors 10 gemäß einer Ausführungsform der Erfindung.

Innerhalb des Reaktorbehältnisses 24 ist das photokatalytische Panel 26 angeordnet. Das photokatalytische Panel 26 ist mit einer semipermeablen Membran 34 gekoppelt. Die semipermeable Membran 34 unterteilt das Innenvolumen des Reaktorbehältnisses 24 in ein erstes Teilvolumen 36 und ein zweites Teilvolumen 38. Das photokatalytische Panel 26 ragt in das erste Teilvolumen 36 hinein.

Generell ist das Eduktgemisch 20 innerhalb des ersten Teilvolumen 36 angeordnet. Die durch die photokatalytische Reaktion erzeugten Produkte 28 werden anhand der semipermeablen Membran 34 aus dem ersten Teilvolumen 36 in das zweite Teilvolumen 38 überführt und anschließend aus dem Reaktorbehältnis 24 entfernt. Durch die Entfernung der Produkte 28 aus dem Reaktorbehältnis 24 kann die Konzentration der Produkte 28 innerhalb des zweiten Teilvolumen 38 reduziert werden, wodurch die Diffusion durch die semipermeable Membran 34 unterstützt wird.

Der photokatalytische Reaktor 10 umfasst gemäß dieser Ausführungsform einen Lichtkollektor 40 der extern zum Reaktorbehältnis 24 angeordnet ist. Das Reaktorbehältnis 24 weist gemäß dieser Ausführungsform eine gekrümmte Oberfläche 41 auf. Die gekrümmte Oberfläche 41 wird in einer Querschnittsansicht durch das Rohr 25 verwirklicht, das kreisrund ist. Der Lichtkollektor 40 weist in einer Querschnittsansicht ebenfalls eine kreisrunde Querschnittskontur auf, die eine gekrümmte Kollektoroberfläche 42 ausbildet. Dadurch ist der Lichtkollektor 40 nach Art einer Fresnel-Linse ausgebildet. Zudem ist der Lichtkollektor 40 konzentrisch mit dem Reaktorbehältnis 24 angeordnet.

Durch die Anordnung des Lichtkollektors 40 relativ zum Reaktorbehältnis 24 kann Licht 43, das eigentlich das Reaktorbehältnis 24 nicht erreichen würde, aber auf den Lichtkollektor 40 fällt, durch den Lichtkollektor 40 in Richtung des Reaktorbehältnisses 24 reflektiert und fokussiert werden. Vorzugsweise weist der Lichtkollektor 40 deshalb eine hochreflektive Oberfläche auf. Beispielsweise kann der Lichtkollektor 40 verspiegelt sein oder eine polierte Aluminiumoberfläche aufweisen. So kann die Lichteinstrahlung auf das Reaktorbehältnis 24 erhöht werden.

Obwohl die Darstellung dieser Figur auf das Reaktorbehältnis 24 bezogen ist, kann eine korrespondierende Anordnung eines Lichtkollektors 40 auch hinsichtlich der Verdampfungskammer 18 der Verdampfungssektion 16 des photokatalytischen Reaktors 10 vorgesehen sein. Dadurch kann auch hinsichtlich der Verdampfungssektion 16 die Lichtausbeute erhöht werden.

In der Folge wird durch die Lichteinstrahlung ein Gemisch 44 aus Wasserdampf und Lösungsmitteldampf generiert. Das Gemisch 44 kann dann im Rahmen der photokatalytischen Reaktion unter Nutzbarmachung von Katalysatoren 46, insbesondere Photokatalysatoren, des photokatalytischen Panels 26 verwendet werden, um Produkte 28 zu erzeugen.

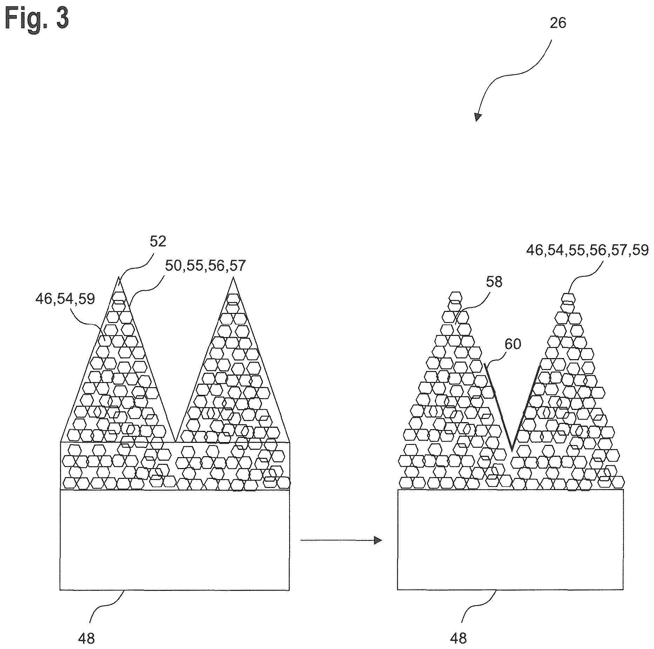

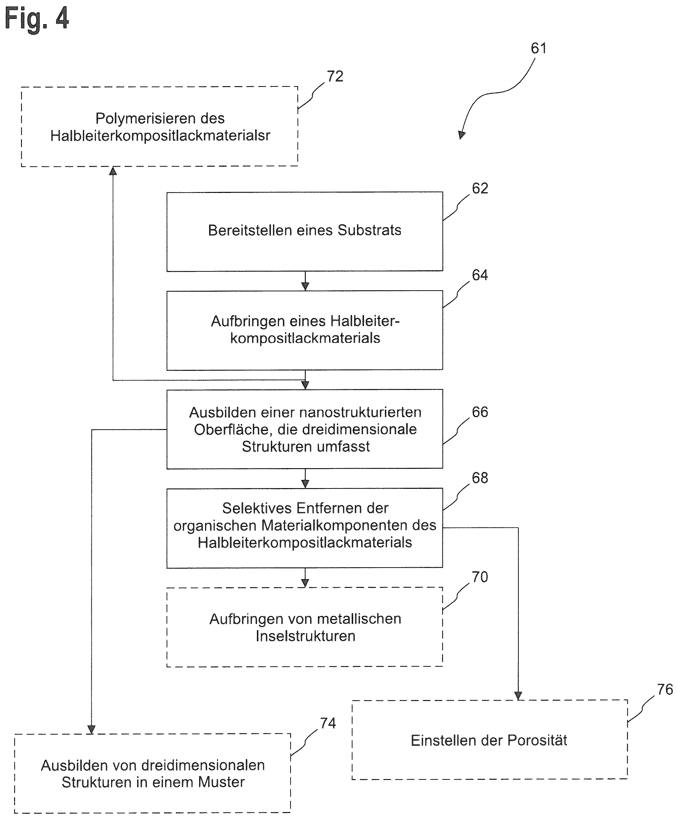

Fig. 3 zeigt eine vereinfachte schematische Darstellung von Teilen eines photokatalytischen Panels 26 eines photokatalytischen Reaktors 10 gemäß einer Ausführungsform der Erfindung. In diesem Zusammenhang zeigt Fig. 4 eine vereinfachte schematische Darstellung eines Verfahrens 61 zur Herstellung eines photokatalytischen Panels 26 für einen photokatalytischen Reaktor 10 gemäß einer Ausführungsform der Erfindung. Optionale Schritte sind gestrichelt dargestellt.

Im Schritt 62 des Verfahrens 61 wird ein Substrat 48 des photokatalytischen Panels 26 bereitgestellt. Das Substrat 48 kann beispielsweise ein Halbleitermaterial umfassen.

Im nachfolgenden Schritt 64 des Verfahrens 61 wird ein Halbleiterkompositlackmaterial 50 auf eine Substratoberfläche aufgebracht. Das Halbleiterkompositlackmaterial 50 weist organische und anorganische Materialkomponenten 52, 54 auf. Wie später noch erläutert wird, werden durch die anorganischen Materialkomponenten 54 (Nanopartikel) insbesondere die Katalysatoren 46 (Photokatalysatoren) für die photokatalytische Reaktion ausgebildet.

Beim Aufbringen des Halbleiterkompositlackmaterials 50 kann eine Maske verwendet werden, damit das Halbleiterkompositlackmaterial 50 eine ungleichmäßige Verteilung auf dem Substrat 48 ausbildet. Dies kann die nachfolgend erläuterte Ausbildung eines Oberflächenmusters unterstützen.

Nachfolgend kann das Halbleiterkompositlackmaterial 50 optional gemäß dem Schritt 72 des Verfahrens 61 anhand eines thermischen oder eines licht-gestützten Expositionsverfahrens polymerisiert werden. Das bedeutet, dass ungesättigte Kohlenwasserstoffverbindungen des Eduktgemischs 20 in gesättigte Kohlenwasserstoffverbindungen umgesetzt werden können. So können die gewünschten Ausgangsstoffe für die nachfolgend ablaufende photokatalytische Reaktion gewährleistet werden.

Nicht dargestellt ist ein nun optional vorgesehener Härtungsprozess des Halbleiterkompositlackmaterials 50.

Das Verfahren 61 umfasst dann den Schritt 66, in dem eine nanostrukturierte Oberfläche 55 durch ein lithographisches Verfahren ausgebildet wird. Die nanostrukturierte Oberfläche 55 weist dreidimensionale Strukturen 56 auf. Die dreidimensionalen Strukturen 56 sind derart geformt, dass Beugungsstrukturen und/oder optische Fallen für auftreffendes Licht und/oder eine Brechungsindexüberleitung hinsichtlich des Substrats 48 ausgebildet werden. Dadurch kann die Absorption des auftreffenden Licht 43 erhöht werden.

Im Schritt 66 kann ebenfalls optional eine Maske verwendet werden, damit die nanostrukturierte Oberfläche 55 die dreidimensionalen Strukturen 56 ausbildet. So können unterschiedliche Bereiche der Oberfläche unterschiedlich stark mit dem zugrundeliegenden Verfahren behandelt werden.

Entsprechend dem optionalen Schritt 74 kann der Schritt 66 dahingehend ausgebildet werden, dass die dreidimensionalen Strukturen 56 in einem sich periodisch wiederholenden Muster 57 angeordnet sind. Das bedeutet, dass gleichförmige Mustereinheiten des Musters 57 ausgebildet werden, die über die Oberfläche regelmäßig verteilt sind. Vorliegend weisen die dreidimensionalen Strukturen 56 beispielsweise Kegelformen auf, die das Muster 57 ausbilden.

Andere Formen der dem Muster 57 zugrunde liegenden Mustereinheiten sind natürlich ebenfalls denkbar.

Das Verfahren 61 weist dann den nachfolgenden Schritt 68 auf, in dem zumindest ein Teil der organischen Materialkomponenten 52 des Halbleiterkompositlackmaterials 50 durch ein selektives Ätzverfahren oder ein thermisches oder laserbasiertes Ablationsverfahren selektiv entfernt wird. In Figur 3 ist links diesbezüglich das Halbleiterkompositlackmaterial 50 vor dem Schritt 68 gezeigt. Vor dem Schritt 68 bilden die organischen Materialkomponenten 52 des Halbleiterkompositlackmaterials 50 eine Matrix für die anorganischen Materialkomponenten 54 aus. Als Folge des Schritts 68 werden die organischen Materialkomponenten 52 zumindest teilweise aus dem Halbleiterkompositlackmaterial 50 entfernt, siehe rechts in Fig. 3. Dadurch entstehen Hohlräume 58 in der nanostrukturierten Oberfläche 55, sodass die erreichbare Oberfläche der anorganischen Materialkomponenten 54 erhöht wird. Vorliegend werden die anorganischen Materialkomponenten 54 durch Nanopartikel 59 ausgebildet, die als (Photo-)Katalysatoren 46 bei der photokatalytischen Reaktion dienen.

Der Schritt 68 des Verfahrens 61 kann durch den optionalen Schritt 76 weitergebildet werden, in dem durch die Anpassung der Parameter während des Schritts 68 die Porosität der nanostrukturierten Oberfläche 55 einstellbar ist. Beispielsweise kann die Zeitdauer verwendet werden, um zu definieren, welche Menge der organischen Materialkomponenten 52 des Halbleiterkompositlackmaterials 50 entfernt wird.

Zusätzlich kann das Verfahren 61 den optionalen Schritt 70 aufweisen, in dem metallische Inselstrukturen 60 auf die Oberfläche aufgebracht werden. Beispielsweise kann dazu ein Depositionsverfahren verwendet werden, wie Verdampfen oder Gasphasenabscheidung. Die metallischen Inselstrukturen 60 können ebenfalls entsprechend dem Muster 57 angeordnet werden. Dies bedeutet, dass für das Aufbringen der metallischen Inselstrukturen 60 ebenfalls eine Maske genutzt werden kann. Die metallischen Inselstrukturen 60 sind eingerichtet, um die Anregung von Oberflächenplasmonen durch die Lichteinstrahlung zu unterstützen. Daher wirken die metallischen Inselstrukturen 60 als Kokatalysator bei der photokatalytischen Reaktion. Dadurch kann die Ausbeute der photokatalytischen Reaktion noch erhöht werden.

In dieser Offenbarung kann auf Mengen und Zahlen Bezug genommen werden. Sofern nicht ausdrücklich angegeben, sind solche Mengen und Zahlen nicht als limitierend zu betrachten, sondern als Beispiele für die möglichen Mengen oder Zahlen im Zusammenhang mit der Offenbarung. In diesem Zusammenhang kann in der Offenbarung auch der Begriff "Mehrzahl" verwendet werden, um auf eine Menge oder Zahl zu verweisen. In diesem Zusammenhang ist mit dem Begriff "Mehrzahl" jede Zahl gemeint, die größer als eins ist, z. B. zwei, drei, vier, fünf, usw. Die Begriffe "etwa", "ungefähr", "nahe" usw. bedeuten plus oder minus 5 % des angegebenen Wertes.

Obwohl die Offenbarung in Bezug auf eine oder mehrere Ausführungsformen dargestellt und beschrieben wurde, wird der Fachmann nach dem Lesen und Verstehen dieser Beschreibung und der beigefügten Zeichnungen gleichwertige Änderungen und Modifikationen vornehmen können.

## Patentansprüche

1. Photokatalytischer Reaktor (10), der ein Reaktorbehältnis (24) aufweist, wobei das Reaktorbehältnis (24) zumindest teilweise lichtdurchlässig ist, wobei in dem Reaktorbehältnis (24) zumindest ein photokatalytisches Panel (26) angeordnet ist, und wobei anhand des photokatalytischen Panels (26) eine photokatalytische Reaktion durchführbar ist.

2. Photokatalytischer Reaktor (10) nach Anspruch 1, **dadurch gekennzeichnet, dass** das photokatalytische Panel (26) mit einer semipermeablen Membran (34) derart gekoppelt ist, dass ein erstes Teilvolumen (36) eines Innenvolumens des Reaktorbehältnisses (24) von einem zweiten Teilvolumen (38) des Innenvolumens des Reaktorbehältnisses (24) separiert ist.

3. Photokatalytischer Reaktor (10) nach Anspruch 2, **dadurch gekennzeichnet, dass** das photokatalytische Panel (26) ausgehend von der semipermeablen Membran (34) in das erste Teilvolumen (36) ragt, wobei in dem ersten Teilvolumen (36) ein Eduktgemisch (20) umfassend Edukte (21) angeordnet ist, und wobei die Edukte (21) durch die photokatalytische Reaktion zumindest teilweise in Produkte (28) umgesetzt werden, die anhand der semipermeablen Membran (34) aus dem ersten Teilvolumen (36) in das zweite Teilvolumen (38) überführbar sind.

4. Photokatalytischer Reaktor (10) nach einem der vorherigen Ansprüche, **dadurch gekennzeichnet, dass** das photokatalytische Panel (26) zumindest ein Substrat (48) und eine nanostrukturierte Oberfläche (55) auf einer Seite des Substrats (48) aufweist.

5. Photokatalytischer Reaktor (10) nach Anspruch 4, **dadurch gekennzeichnet, dass** die nanostrukturierte Oberfläche (55) dreidimensionale Strukturen (56) aufweist, die derart geformt sind, dass Beugungsstrukturen und/oder optische Fallen für das auftreffende Licht und/oder eine Brechungsindexüberleitung hinsichtlich des Substrats (48) ausgebildet werden.

6. Photokatalytischer Reaktor (10) nach einem der Ansprüche 4 bis 5, **dadurch gekennzeichnet, dass** die nanostrukturierte Oberfläche (55) als Photokatalysator wirkende, porös angeordnete Nanopartikel (59) aufweist.

7. Photokatalytischer Reaktor (10) nach einem der Ansprüche 4 bis 6, **dadurch gekennzeichnet, dass** die nanostrukturierte Oberfläche (55) zumindest anteilig metallische Inselstrukturen (60) aufweist, die derart eingerichtet sind, dass unter der Lichteinstrahlung Oberflächenplasmonen anregbar sind, und wobei die Inselstrukturen (60) bei der photokatalytischen Reaktion als Kokatalysator beitragen.

8. Photokatalytischer Reaktor (10) nach einem der vorherigen Ansprüche, **dadurch gekennzeichnet, dass** der Reaktor (10) ferner einen extern zum Reaktorbehältnis (24) angeordneten Lichtkollektor (40) aufweist, der angeordnet und eingerichtet ist, Licht (43) auf das Reaktorbehältnis (24) zu fokussieren.

9. Photokatalytischer Reaktor (10) nach Anspruch 12, **dadurch gekennzeichnet, dass** der Lichtkollektor (40) als eine Fresnel-Linse ausgebildet ist.

10. Verfahren (61) zur Herstellung eines photokatalytischen Panels (26) für einen photokatalytischen Reaktor (10), mit zumindest den folgenden Schritten:
- Bereitstellen eines Substrats (48);
- Aufbringen eines Halbleiterkompositlackmaterials (50) auf eine Substratoberfläche, wobei das Halbleiterkompositlackmaterial (50) organische und anorganische Materialkomponenten (52, 54) aufweist,
- Ausbilden einer nanostrukturierten Oberfläche (55) durch ein lithographisches Verfahren, wobei die nanostrukturierte Oberfläche (55) dreidimensionale Strukturen (56) aufweist, die derart geformt sind, dass Beugungsstrukturen und/oder optische Fallen für auftreffendes Licht und/oder eine Brechungsindexüberleitung hinsichtlich des Substrats (48) ausgebildet werden, und
- Entfernen zumindest eines Teils der organischen Materialkomponenten (52) des Halbleiterkompositlackmaterials (50) durch ein selektives Ätzverfahren, oder ein thermisches oder laserbasiertes Ablationsverfahren.

11. Verfahren (61) nach Anspruch 10, **dadurch gekennzeichnet, dass** die anorganischen Materialkomponenten (54) zumindest teilweise durch als Photokatalysator wirkende, porös angeordnete Nanopartikel (59) ausgebildet werden.

12. Verfahren (61) nach Anspruch 10 oder 11, **dadurch gekennzeichnet, dass** eine Porosität der dreidimensionalen Struktur (56) während ihrer Herstellung im Schritt des Entfernens der organischen Materialkomponenten (52) einstellbar ist.

13. Verfahren (61) nach einem der Ansprüche 10 bis 12, **dadurch gekennzeichnet, dass** zusätzliche metallische Inselstrukturen (60) auf die nanostrukturierte Oberfläche (55) aufgebracht werden.

14. Verfahren (61) nach einem der Ansprüche 10 bis 13, **dadurch gekennzeichnet, dass** die nanostrukturierte Oberfläche (55) basierend auf dem lithographischen Verfahren derart ausgebildet wird, dass die dreidimensionalen Strukturen (56) in einem sich periodisch wiederholenden Muster (57) angeordnet sind.

15. Verfahren (61) nach einem der Ansprüche 10 bis 14, **dadurch gekennzeichnet, dass** das Halbleiterkompositlackmaterial (50) anhand eines thermischen oder eines licht-gestützten Expositionsverfahrens polymerisiert wird.
